# EUROPEAN PATENT APPLICATION

(11) **EP 4 382 401 A1**
(43) Date of publication of application: **12.06.2024**
(21) Application number: 23210129.5
(22) Date of filing: 15.11.2023
(51) Int. Cl.: B62D 55/084, B62D 55/125, B62D 55/30

(54) **CRAWLER TRAVELING BODY AND TRAVELING APPARATUS**

(30) Priority: 30.11.2022 JP 2022191860; 06.09.2023 JP 2023144662
(71) Applicant: Ricoh Company, Ltd., Tokyo 143-8555 (JP)
(72) Inventor: TAKAHASHI, Yasufumi, Tokyo 143-8555 (JP); OKAMOTO, Hiroshi, Tokyo 143-8555 (JP)
(74) Representative: SSM Sandmair

(57) **Abstract**

A crawler traveling body includes a crawler (11); an in-wheel motor (14) to apply a driving force to the crawler (11), having a rotation shaft (141); a drive wheel (13) in which the in-wheel motor (14) is built; two wheels (15a, 15b) disposed below the drive wheel (13); a tensioner (25A, 25B) that presses the drive wheel (13) against the crawler (11) wound around the drive wheel (13) and the two wheels (15a, 15b), to apply tension to the crawler (11); and a brake unit (30) to restrict the driving force to stop rotation of the crawler (11).

## Description

### BACKGROUND

### Technical Field

Embodiments of the present disclosure relate to a crawler traveling body and a traveling apparatus.

### Related Art

Some traveling apparatuses known in the art include crawler traveling bodies to enhance the stability of traveling. For example, Japanese Unexamined Patent Application Publication No. 2021-116061 discloses a traveling apparatus that includes a crawler traveling body and a built-in-wheel motor to supply power to a crawler belt so that the traveling apparatus travels.

In the crawler traveling body known in the art such as that described in Japanese Unexamined Patent Application Publication No. 2021-116061, the stop of the traveling body is controlled by control of the in-wheel motor. For this reason, it is possible that the traveling body is not stopped at a desired time because the behavior of the traveling body varies depending on the road surface condition such as a slope or a rough road. Thus, in the crawler traveling body known in the art, there is room for enhancement in the stop control.

### SUMMARY

According to one aspect of the present disclosure, a crawler traveling body includes a crawler; an in-wheel motor to apply a driving force to the crawler, having a rotation shaft; a drive wheel in which the in-wheel motor is built; two wheels disposed below the drive wheel; a tensioner that presses the drive wheel against the crawler wound around the drive wheel and the two wheels, to apply tension to the crawler; and a brake unit to restrict the driving force to stop rotation of the crawler.

According to another aspect of the present disclosure, a traveling apparatus includes two crawler traveling bodies and a main body that supports the two crawler traveling bodies. Each of the two crawler traveling bodies includes the crawler, the in-wheel motor, the drive wheel, the two wheels, the tensioner, and the brake unit described above.

Accordingly, the accuracy of stop control of a crawler traveling body is enhanced.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic perspective view of a traveling apparatus according to one embodiment of the present disclosure;
FIG. 2 is a side view of a crawler traveling body of the traveling apparatus illustrated in FIG. 1;
FIG. 3 is a block diagram illustrating a hardware configuration of the traveling apparatus illustrated in FIG. 1, according to one embodiment of the present disclosure;
FIG. 4 is a perspective view of components attached to an in-wheel motor in the crawler traveling body according to one embodiment of the present disclosure;
FIG. 5 is a perspective view of the in-wheel motor illustrated in FIG. 4;
FIG. 6 is a perspective view of a brake unit of the traveling apparatus according to one embodiment of the present disclosure, as viewed from an outer side of the traveling apparatus in a width direction thereof;
FIG. 7 is a perspective view of the brake unit illustrated in FIG. 6, as viewed from an inner side of the traveling apparatus in the width direction;
FIG. 8 is a plan view of components around the in-wheel motor according to one embodiment of the present disclosure, illustrating their layout as viewed from above;
FIG. 9 is a schematic diagram illustrating an internal configuration of the brake unit according to one embodiment of the present disclosure;
FIG. 10 is a schematic diagram illustrating another internal configuration of the brake unit according to one embodiment of the present disclosure;
FIG. 11 is a schematic diagram illustrating an arrangement of the brake unit and a tensioner of the traveling apparatus according to one embodiment of the present disclosure;
FIG. 12 is a schematic diagram illustrating another arrangement of the brake unit and the tensioner of the traveling apparatus according to one embodiment of the present disclosure;
FIG. 13 is a plan view of a brake unit and a tensioner according to a first modification of the above embodiment of the present disclosure, illustrating their arrangement as viewed from above;
FIG. 14 is a plan view of a brake unit and a tensioner according to a second modification of the above embodiment of the present disclosure, illustrating their arrangement as viewed from above;
FIG. 15 is a plan view of a brake unit and a tensioner according to a third modification of the above embodiments of the present disclosure, illustrating their arrangement as viewed from above; and
FIG. 16 is a plan view of a brake unit and a tensioner according to a fourth modification of the above embodiments of the present disclosure, illustrating their arrangement as viewed from above.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Embodiments of the present disclosure will be described below with reference to the accompanying drawings. In order to facilitate the understanding of the description, like components are denoted by like reference signs throughout the drawings, and redundant descriptions may be omitted.

In the following description, an X direction, a Y direction, and a Z direction are directions perpendicular to each other. The X direction and the Y direction are horizontal directions, and the Z direction is a vertical direction. The X direction is the front-rear direction of the traveling apparatus 1. The Y direction is the lateral direction or the width direction of the traveling apparatus 1. In the description given below, a positive side in the Z direction may be referred to as an upper side, and a negative side in the Z direction may be referred to as a lower side, for the convenience of description.

### Configuration of Traveling Apparatus

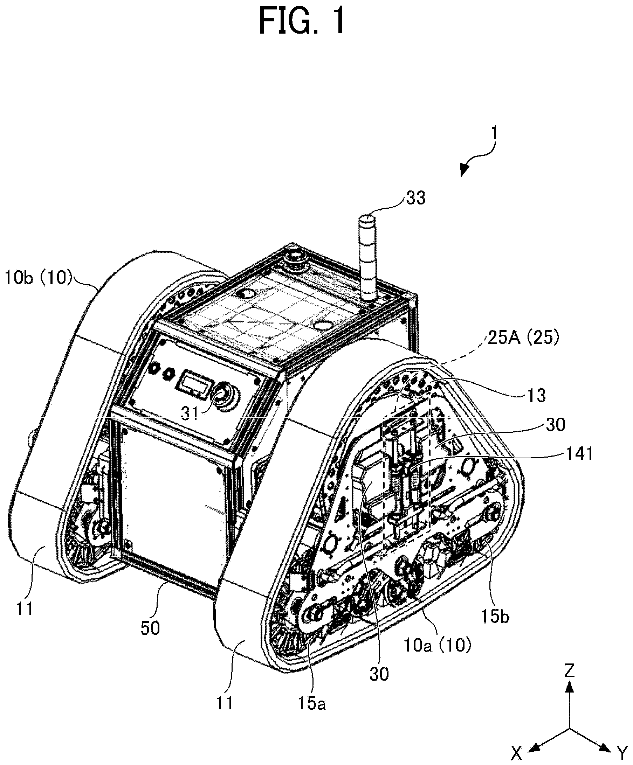

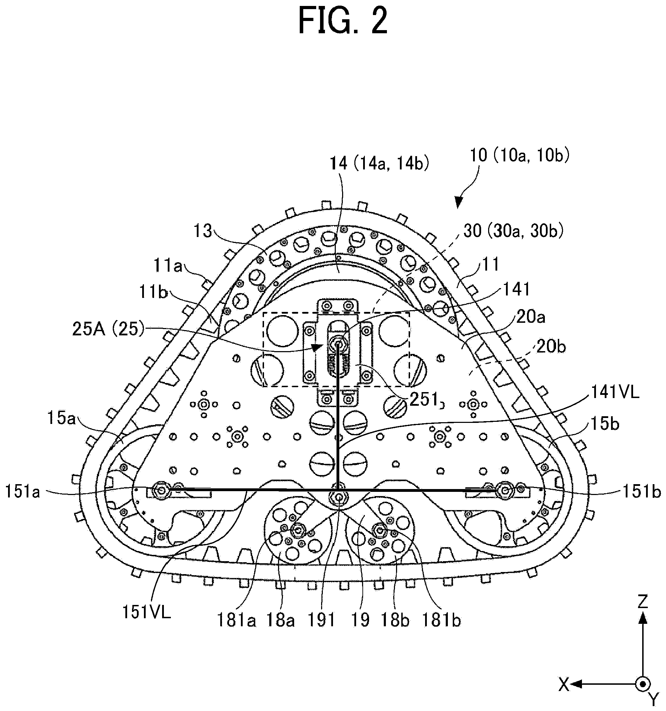

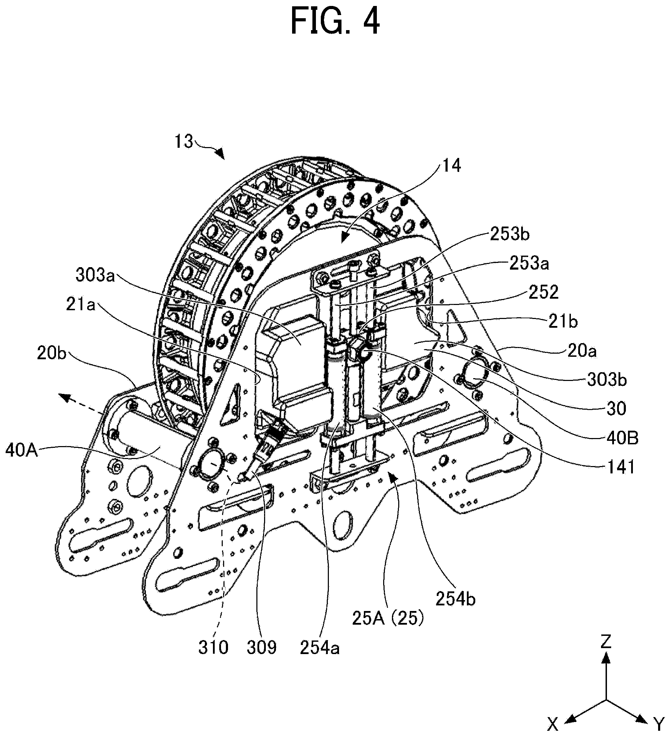

With reference to FIGS. 1 to 3, a description is given below of a configuration of a traveling apparatus 1 including a pair of crawler traveling bodies 10a and 10b according to an embodiment of the present disclosure. FIG. 1 is a schematic perspective view of the traveling apparatus 1 according to the present embodiment. FIG. 2 is a side view of one of the crawler traveling bodies 10a and 10b in FIG. 1. Since the crawler traveling bodies 10a and 10b have a similar structure, the crawler traveling bodies 10a and 10b may be collectively referred to as the "crawler traveling bodies 10" in the following description and given the same reference sign "10" in FIG. 2 and the subsequent drawings. Although FIG. 2 illustrates a simplified shape of a side plate 20a of the crawler traveling body 10, the side plate 20a has the shape illustrated in, for example, FIGS. 1 and 4 and has openings 21b and 21b.

As illustrated in FIG. 1, the traveling apparatus 1 includes a main body 50 at the center in the Y direction, and the pair of crawler traveling bodies 10a and 10b on both sides of the main body 50 in the Y direction. The crawler traveling bodies 10a and 10b travel in contact with a traveling surface. The traveling apparatus 1 changes the traveling direction by applying a speed difference between the pair of crawler traveling bodies 10a and 10b.

As illustrated in FIGS. 1 and 2, the traveling apparatus 1 uses the crawler traveling bodies 10 each of which has a triangular shape formed by a drive wheel 13 and two wheels 15a and 15b so that the traveling apparatus 1 travels in a stable posture. In the drive wheel 13, an in-wheel motor 14 is built. The wheels 15a and 15b may be referred to as road wheels in the following description. The traveling apparatus 1 including the crawler traveling bodies 10 as described above has high traveling performance and can stably travel on rough ground having unevenness.

The crawler traveling bodies 10a and 10b are units serving as traveling means of the traveling apparatus 1. The crawler traveling bodies 10a and 10b include crawlers using metallic or rubber belts. Compared with a traveling body that travels with tires, such as an automobile, the crawler traveling body has a wider contact area with the ground. Accordingly, the travel is more stable even in an environment with bad footing, for example. While the traveling body that travels with tires requires space to make a turn, the traveling apparatus including the crawler traveling body can perform a so-called spin turn. Accordingly, the traveling apparatus can smoothly turn even in a limited space.

The main body 50 is a support body that supports the crawler traveling bodies 10a and 10b to travel and contains a control unit that controls the driving of the traveling apparatus 1. The main body 50 further includes a battery 530 described below to supply electric power for driving the crawler traveling bodies 10a and 10b.

As illustrated in FIG. 1, the main body 50 of the traveling apparatus 1 includes an emergency stop button 31 and a state indicator lamp 33. The emergency stop button 31 is an operation device to be pressed by a person around the traveling apparatus 1 to stop the traveling apparatus 1 being traveling.

The state indicator lamp 33 serves as a notification device to indicate a state of the traveling apparatus 1. For example, when the state of the traveling apparatus 1 changes due to a decrease in the remaining battery level, the state indicator lamp 33 lights up to notify a person nearby of the state change of the traveling apparatus 1. Further, the state indicator lamp 33 lights in the detection of a risk of an abnormality, which is, for example, the detection of an obstacle that obstructs the traveling of the traveling apparatus 1. Although the traveling apparatus 1 in FIG. 1 includes one state indicator lamp 33, the number of state indicator lamp 33 is not limited thereto and may be two or more. In alternative to or in addition to the state indicator lamp 33, the notification device may include, for example, a speaker to output an alert sound indicating a state of the traveling apparatus 1.

The crawler traveling bodies 10 each have the triangular shape formed by the drive wheel 13 and the two wheels 15a and 15b as illustrated in FIG. 2. The triangular crawler traveling bodies 10 have the following advantages. For example, when the front-rear length of the traveling body is limited, the triangular shape can maximize the contact area of the crawler traveling body with the ground within the limited length and increase the stability of traveling. By contrast, in the case of so-called tank crawler whose drive wheels in upper portions of the crawler traveling bodies 10 have widths wider than the road wheels in lower portions of the crawler traveling bodies 10, when the front-rear length is limited, the contact area with the ground is small as a whole, making the traveling unstable. As described above, the crawler traveling bodies 10 according to the present embodiment are effective in enhancing the traveling performance, especially when used in the traveling apparatus 1 that is relatively small.

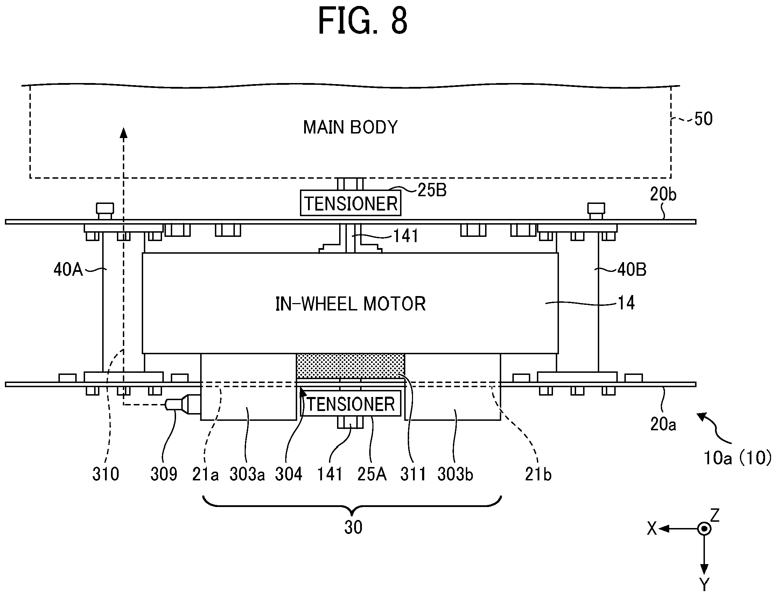

The crawler traveling bodies 10 each include a crawler 11, the drive wheel 13, the in-wheel motor 14, the wheels 15a and 15b, idler wheels 18a and 18b, a link 19, a pair of side plates 20a and 20b, tensioners 25A and 25B (see also FIG. 8), and a brake unit 30. The tensioners 25A and 25B (may be collectively referred to as "tensioners 25A and 25B" in the following description) are held on the side plates 20a and 20b, respectively.

The crawler 11 is made of metal or rubber. The crawler 11 is wound around the drive wheel 13 and the wheels 15a and 15b. Driven by the drive wheel 13, the crawler 11 drives the wheels 15a and 15b and moves the crawler traveling body 10. The crawler 11 has multiple projections 11a and 11b on an outer face and an inner face thereof. The projections 11a on the outer face of the crawler 11 are for the crawler 11 to ride over a small obstacle such as a stone on the road surface and stably travel thereon. The projections 11b on the inner face of the crawler 11 are for preventing the crawler 11 from coming off the drive wheel 13 or the wheel 15a or 15b.

The drive wheel 13 transmits a driving force to the crawler 11 to roll the crawler traveling body 10. In the crawler traveling body 10, the in-wheel motor 14 transmits the driving force (rotational force) to the drive wheel 13, and the crawler 11 transmits the driving force to the wheels 15a and 15b.

The in-wheel motor 14 is built in the drive wheel 13 and transmits the rotational force to the drive wheel 13. The in-wheel motor 14 rotates about a motor shaft 141. The motor shaft 141 is a rotation shaft of the in-wheel motor 14 and also serves as a rotation shaft of the drive wheel 13, and the rotational force of the in-wheel motor 14 rotates the drive wheel 13. The rotational force of the in-wheel motor 14 is transmitted to the crawler 11 as the driving force. Specifically, the in-wheel motor 14 gives the drive wheel 13 a positive rotational force to move the traveling apparatus 1 forward or a negative rotational force to move the traveling apparatus 1 backward.

Building the in-wheel motor 14 in the drive wheel 13 simplifies the structure of the crawler traveling body 10. For example, building the in-wheel motor 14 in the drive wheel 13 obviates the use of a drive chain or a gear and can reduce risk such as a failure caused by such a component. In addition, since the in-wheel motor 14 built in the drive wheel 13 generates the driving force in the vicinity of the outer periphery of the crawler traveling body 10, the in-wheel motor 14 can generate a large torque.

The wheels 15a and 15b are rotatably attached to the crawler traveling body 10. The driving force (rotational force) transmitted from the drive wheel 13 via the crawler 11 rotates the wheels 15a and 15b about wheel shafts 151a and 151b serving as rotation shafts, respectively.

The drive wheel 13 and the wheels 15a and 15b form a triangle in a side view. The crawler 11 is wound around the drive wheel 13 and the wheels 15a and 15b and contacts the ground in a range between the wheels 15a and 15b. In other words, the drive wheel 13 in which the in-wheel motor 14 is built does not contact the road surface. As a result, the in-wheel motor 14 does not sink in the water, for example, even when the crawler traveling body 10 travels in a puddle. Accordingly, a waterproof mechanism dedicated to the in-wheel motor 14 is not required.

The diameter of the drive wheel 13 is different from those of the wheels 15a and 15b. The component layout of traveling bodies is designed considering required factors such as size limitations and the traveling performance. Typically, the torque per unit width of a motor tends to decrease as the diameter of the motor decreases. Accordingly, the diameter of the drive wheel incorporating the in-wheel motor needs to be equal to or larger than the diameter of the motor that exhibits the required torque performance. As a result, in the layout of the crawler traveling body 10, the diameter of the drive wheel 13 disposed in an upper portion of the crawler traveling body 10 is made larger than the diameters of the wheels 15a and 15b to satisfy the required traveling performance and the size limitations of the traveling apparatus 1 or the crawler traveling body 10. When the size of the traveling apparatus 1 or the crawler traveling body 10 is limited, increasing the diameters of the road wheels reduces the ground contact area and accordingly degrades the traveling stability. In this regard, adopting the wheels 15a and 15b smaller in diameter than the drive wheel 13 has an advantage.

The idler wheels 18a and 18b are auxiliary wheels disposed between the two wheels 15a and 15b and are rotated by the crawler 11. The idler wheels 18a and 18b rotate about idler wheel shafts 181a and 181b serving as rotation shafts, respectively. The link 19 is a support that supports the idler wheels 18a and 18b.

The side plate 20a supports the drive wheel 13, the wheels 15a and 15b, and the idler wheels 18a and 18b in the crawler traveling body 10. The side plate 20a is disposed on the positive side in the Y direction of the crawler traveling body 10. In addition, the side plate 20b having the same or similar shape as that of the side plate 20a is disposed opposite the side plate 20b, i.e., disposed on the negative side in the Y direction of the crawler traveling body 10. The crawler traveling body 10 supports both ends of the drive wheel 13 and the wheels 15a and 15b with the two side plates 20a and 20b. The side plates 20a and 20b support the drive wheel 13 using the motor shaft 141. The side plates 20a and 20b support the wheels 15a and 15b using the wheel shafts 151a and 151b, respectively. The side plates 20a and 20b further support the idler wheels 18a and 18b via a link shaft 191 of the link 19 that supports the idler wheels 18a and 18b.

The tensioner 25 is an elastic member such as a spring and is coupled to the motor shaft 141 that is the rotation shaft of both the in-wheel motor 14 and the drive wheel 13. The tensioner 25 biases the drive wheel 13 to press against the inner face of the crawler 11 to apply tension to the crawler 11. The tensioner 25 adjusts the tension applied from the drive wheel 13 to the crawler 11 during traveling. The tensioner 25 keeps a reference tension substantially constant during traveling with reference to, for example, the tension of the crawler traveling body 10 being stationary. In the crawler traveling body 10, the tensioner 25 adjusts the tension of the crawler 11 so that the crawler 11 keeps transmitting a proper driving force. The crawler traveling body 10 can prevent the crawler 11 from coming off the wheels by applying the tension to the crawler 11 with the tensioner 25.

The brake unit 30 restricts the rotation of the in-wheel motor 14 to stop the rotation of the crawler 11 when the traveling apparatus 1 stops. The brake unit 30 surrounds the outer periphery of the motor shaft 141 of the in-wheel motor 14.

As described above, the traveling apparatus 1 includes the pair of crawler traveling bodies 10a and 10b, each of which may be referred to as the "crawler traveling body 10" as illustrated in FIG. 2. The in-wheel motor 14 and the brake unit 30 described with reference to FIG. 2 are disposed in each of the crawler traveling bodies 10a and 10b. In other words, the traveling apparatus 1 includes one pair of in-wheel motors 14 and one pair of brake units 30. In the following description, the in-wheel motor 14 and the brake unit 30 of the crawler traveling body 10a may be referred to as the "in-wheel motor 14a" and the "brake unit 30a," respectively, and the in-wheel motor 14 and the brake unit 30 of the crawler traveling body 10b may be referred to as the "in-wheel motor 14b" and the "brake unit 30b," respectively.

As illustrated in FIGS. 1 and 2, the crawler traveling body 10 has a substantially symmetrical structure in the traveling direction (X direction) with respect to the drive wheel 13. Specifically, in a side view in the X direction as illustrated in FIGS. 1 and 2, the crawler traveling body 10 is substantially symmetrical with respect to a vertical line 141VL (illustrated in FIG. 2) that extends from the motor shaft 141 of the in-wheel motor 14 to a line 151VL (illustrated in FIG. 2) that connects the wheel shafts 151a and 151b of the two wheels 15a and 15b.

For example, a traveling apparatus that travels in a narrow space such as a corridor of an office frequently performs forward and backward movements and spin turns. In such a case, if the traveling apparatus is asymmetrical in the shape of the crawler; or the arrangement of the drive wheel, the road wheels, and the tensioner in the traveling direction, the driving characteristics may be different between the forward traveling and the backward traveling. As a result, the traveling apparatus may fail to rotate about the center of the traveling apparatus in spin turns. Accordingly, the crawler traveling body 10 having the symmetrical structure (or the symmetrical layout) in the traveling direction can increase the stability of traveling of the traveling apparatus 1 and simplify the control of the traveling apparatus 1. Since the crawler traveling body 10 having a symmetrical structure can be attached to either of the right and left sides of the traveling apparatus 1, the number of parts is reduced.

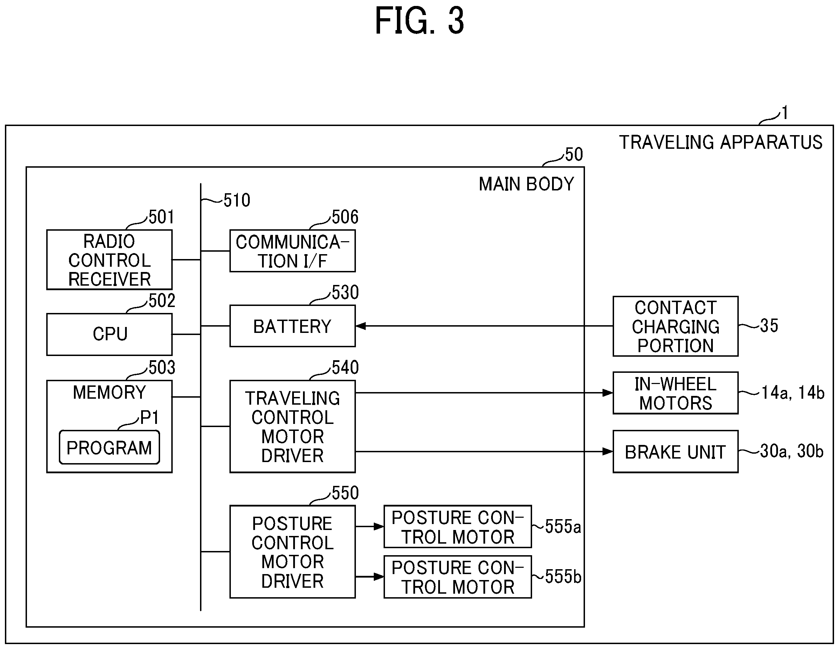

FIG. 3 is a block diagram illustrating a hardware configuration of the traveling apparatus 1 according to the present embodiment. As illustrated in FIG. 1, the traveling apparatus 1 includes the main body 50 that controls the operation of the traveling apparatus 1. The main body 50 includes a radio control receiver 501 (e.g., a circuit), a central processing unit (CPU) 502, a memory 503, a communication interface (I/F) 506, the battery 530, a traveling control motor driver 540, a posture control motor driver 550, and posture control motors 555a and 555b. The radio control receiver 501, the CPU 502, the memory 503, the communication I/F 506, the battery 530, the traveling control motor driver 540, and the posture control motor driver 550 are connected via a system bus 510. The system bus 510 is, for example, an address bus or a data bus for electrically connecting the above-mentioned components and transmitting address signals, data signals, and various types of control signals.

The radio control receiver 501 receives operation instruction signals transmitted from a transmitter such as a personal computer (PC) used by an operator operating the traveling apparatus 1.

The CPU 502 controls the entire operation of the traveling apparatus 1. The CPU 502 is a processor that reads, from the memory 503, a program P1 and various kinds of data used to drive the traveling apparatus 1 and executes processing according to the program P1, to implement functions of the traveling apparatus 1.

The memory 503 stores the program P1 executed by the CPU 502 and the various kinds of data for operating the traveling apparatus 1. The program P 1 is prestored in the memory 503.

Alternatively, the program P1 may be provided as a file in a format installable to or executable by the CPU 502 (or a computer) and stored in a computer-readable recording medium such as a compact disc read-only memory (CD-ROM), a flexible disk (FD), a compact disc recordable (CD-R), or a digital versatile disk (DVD). Alternatively, the program P1 may be stored in a computer connected to a network, such as the Internet, and downloaded through the network to the traveling apparatus 1. Alternatively, the program P1 may be provided or distributed through the network such as the Internet. When the program P1 is provided from outside the traveling apparatus 1, the CPU 502 reads the program P1 via the communication I/F 506. Instead of being implemented by the operation of the CPU 502 according to the program P 1, the functions of the traveling apparatus 1 may be implemented by hardware. In other words, the traveling apparatus 1 may include a dedicated application-specific integrated circuit (ASIC) that has the same calculation and control functions as those executed by the program P1.

The communication I/F 506 is a communication interface for communicating (connecting) with other devices or apparatuses via a communication network. The communication I/F 506 is a communication interface such as a wired or wireless local area network (LAN). The communication I/F 506 may include a communication interface that supports a communication technology such as third Generation (3G), Long Term Evolution (LTE), fourth Generation (4G), fifth Generation (5G), Wireless Fidelity (WI-FI), Worldwide Interoperability for Microwave Access (WIMAX), ZIGBEE, or millimeter wave wireless communication. The traveling apparatus 1 may include a communication circuit to perform short-range wireless communication such as near field communication (NFC) or BLUETOOTH.

The battery 530 is a power supply unit that supplies the traveling apparatus 1 with power to perform operations or processing. Specifically, the battery 530 supplies power to, for example, the in-wheel motors 14a and 14b and the posture control motors 555a and 555b. By contrast, the main body 50 includes a face including a contact charging portion 35. The battery 530 is electrically connected to the contact charging portion 35 and is charged with power supplied from an external charger via the contact charging portion 35 in a charging task.

The traveling control motor driver 540 supplies motor drive signals to the in-wheel motors 14a and 14b to drive the in-wheel motors 14a and 14b. The traveling control motor driver 540 is also electrically connected to the brake units 30a and 30b, and supplies control signals to the brake units 30a and 30b, to operate the brake units 30a and 30b.

The in-wheel motor 14a is disposed inside the drive wheel 13 of the crawler traveling body 10a, and the in-wheel motor 14b is disposed inside the drive wheel 13 of the crawler traveling body 10b. The in-wheel motors 14a and 14b transmit rotational forces to the drive wheels 13, respectively. The in-wheel motors 14a and 14b rotate the respective drive wheels 13 of the crawler traveling bodies 10a and 10b in a positive direction to move the traveling apparatus 1 forward or in a negative direction to move the traveling apparatus 1 backward. Further, for causing the traveling apparatus 1 to make a pivot turn, the in-wheel motors 14a and 14b rotate only one of the drive wheels 13 of the crawler traveling bodies 10a and 10b in the positive direction or the negative direction with the other drive wheel 13 kept stationary. Further, for causing the traveling apparatus 1 to make a spin turn, the in-wheel motors 14a and 14b rotate only one of the drive wheels 13 of the crawler traveling bodies 10a and 10b in the positive direction while rotating the other drive wheel 13 in the negative direction.

The brake units 30a and 30b are installed in the crawler traveling bodies 10a and 10b, respectively, and individually stop the in-wheel motors 14a and 14b of the crawler traveling bodies 10a and 10b. As a result, the drive wheels 13 of the crawler traveling bodies 10a and 10b can individually stop rotating. Accordingly, the operations such as the stop and the pivot turn of the traveling apparatus 1 can be controlled appropriately with high accuracy.

The posture control motor driver 550 supplies motor drive control signals to the posture control motors 555a and 555b to drive the posture control motors 555a and 555b, respectively. The posture control motors 555a and 555b adjust, for example, the heights of the links 19 according to posture control signals from the posture control motor driver 550, to adjust the heights of the idler wheels 18a and 18b. Further, the posture control motors 555a and 555b control the posture of the main body 50 to prevent the traveling apparatus 1 from falling.

The traveling apparatus 1 may travel using a technique of, for example, autonomous traveling or line tracing in addition or in alternative to traveling in accordance with operation instructions received by the radio control receiver 501. Alternatively, the traveling apparatus 1 may receive, with the communication I/F 506, the operation instruction signals transmitted via a communication network so that the traveling apparatus 1 travels in accordance with a remote control by an operator at a remote site. The traveling apparatus 1 may automatically perform operations such as traveling and various other tasks under the control of a host system such as a server, in addition to operating under the manual remote control by the operator. In this case, the traveling apparatus 1 receives the operation instruction signals from the host system via the radio control receiver 501 or the communication I/F 506.

Regarding the dimensions of the traveling apparatus 1 illustrated in FIGS. 1 to 3, for example, the front-rear length, the lateral length, and the height are about 1 meter.

### Configuration around In-Wheel Motor 14

With reference to FIGS. 4 to 16, a description is given in detail of a configuration around the in-wheel motor 14 of the crawler traveling body 10. In the following description and FIGS. 4 to 16, the configuration or arrangement of the crawler traveling body 10a (of the pair of the crawler traveling bodies 10a and 10b) on the positive side in the Y direction of the traveling apparatus 1, according to the present embodiment, is described. In other words, in the case of FIG. 4, the main body 50 is positioned on the back side of the paper on which FIG. 4 is drawn, and the outer side face of the traveling apparatus 1 is positioned on the front side of the paper on which FIG. 4 is drawn.

FIG. 4 is a perspective view of components of the crawler traveling body 10 attached to the in-wheel motor 14 according to the present embodiment. In FIG. 4, components (e.g., the crawler 11 and the wheels 15a and 15b) that are less relevant to the following description are not illustrated. FIG. 4 illustrates the drive wheel 13, the side plates 20a and 20b, the tensioner 25, and the brake unit 30 as the components attached to the in-wheel motor 14.

The tensioner 25 is coupled to the motor shaft 141 of the in-wheel motor 14. The tensioner 25 presses the drive wheel 13 against the crawler 11 to apply tension to the crawler 11. Although the tensioner 25 attached to the side plate 20a is covered with an exterior casing 251 in FIG. 2, the exterior casing 251 may be omitted as illustrated in FIG. 4. The tensioner 25 is coupled to the motor shaft 141 of the in-wheel motor 14 built in the drive wheel 13.

The tensioner 25 includes a block 252, a pair of shafts 253a and 253b, and a pair of elastic bodies 254a and 254b.

The block 252 has a through hole penetrated by the motor shaft 141 so that the tensioner 25 is coupled to the motor shaft 141. The block 252 and the motor shaft 141 are coupled into a single unit, for example, by bolt fastening as illustrated in FIG. 4.

The shafts 253a and 253b guide the elastic deformation of the elastic bodies 254a and 254b, respectively. The elastic bodies 254a and 254b are, for example, springs disposed along the shafts 253a and 253b, respectively. The elastic bodies 254a and 254b elastically deform in the vertical direction, guided by the shafts 253a and 253b, respectively.

The shafts 253a and 253b are disposed at equal intervals in the X direction from the motor shaft 141 interposed therebetween. The block 252 is coupled to the motor shaft 141 at a central portion in the X direction of the drive wheel 13. The shafts 253a and 253b penetrate a positive-side portion and a negative-side portion of the block 252 in the X direction, respectively, with the coupling portion with the motor shaft 141 interposed therebetween. As a result, the block 252 can slide in the axial direction of the shafts 253a and 253b.

Further, the upper ends and lower ends of the shafts 253a and 253b are fixed to the side plate 20a as illustrated in, for example, FIG. 4. In other words, the tensioner 25 is held by the side plate 20a via the shafts 253a and 253b. The elastic bodies 254a and 254b are disposed on the shafts 253a and 253b, respectively, at positions below the block 252, and are biased upward when the traveling body is not traveling. As a result, the tensioner 25 pushes up the motor shaft 141 via the block 252 in conjunction with the deformation of the elastic bodies 254a and 254b. In doing so, the tensioner 25 presses the drive wheel 13 against the crawler 11, thereby applying tension to the crawler 11. Alternatively, instead of the elastic bodies 254a and 254b, the tensioner 25 may include a component (or a mechanism) such as an oil damper which expands and contracts in the vertical direction, so as to move the drive wheel 13 in the vertical direction.

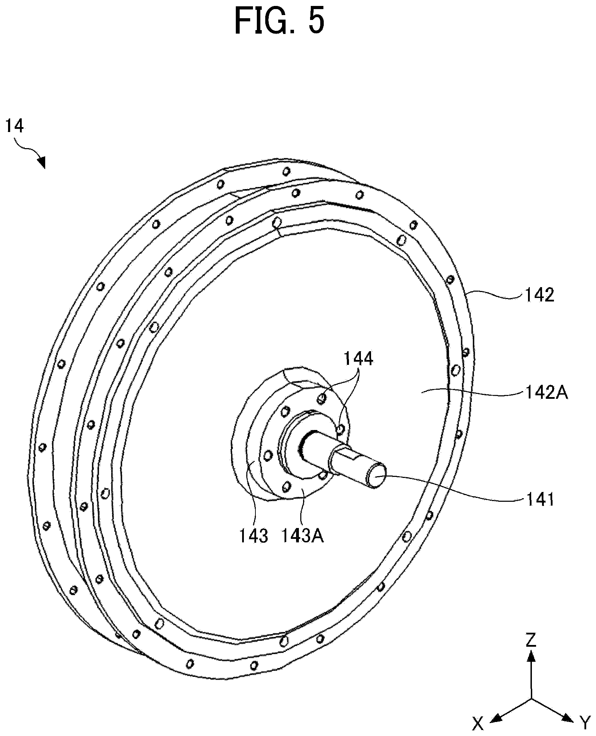

FIG. 5 is a perspective view of the in-wheel motor 14 according to the present embodiment. The in-wheel motor 14 includes the motor shaft 141 and a rotator 142. The rotator 142 is disk shaped and includes a driving source therein. The motor shaft 141 is disposed at the center of the disk shape of the rotator 142. With this structure, as the rotator 142 rotates about the motor shaft 141 that is secured, the in-wheel motor 14 is driven. The rotator 142 includes a cylindrical portion 143 that surrounds the motor shaft 141 and projects from one major face 142A of the rotator 142. The major face 142A is on the positive side in the Y direction in FIG. 5. The cylindrical portion 143 has an end face 143A in which multiple bolt holes 144 for mounting the brake unit 30 are formed. In the present embodiment described with reference to FIG. 5, the number of the bolt holes 144 is six. For example, the end face 143A has an annular shape having a diameter of 44 mm. The end face 143A is provided with a tap of 5 mm width, as the bolt hole 144, at six positions along the circumference thereof (in the arc-shaped direction). The brake unit 30 bolted to the bolt holes 144 restricts the rotation of the in-wheel motor 14 to provide the in-wheel motor 14 with a brake function.

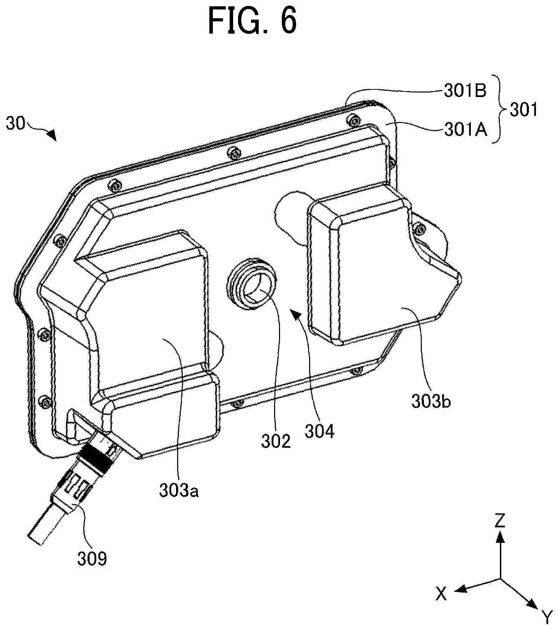

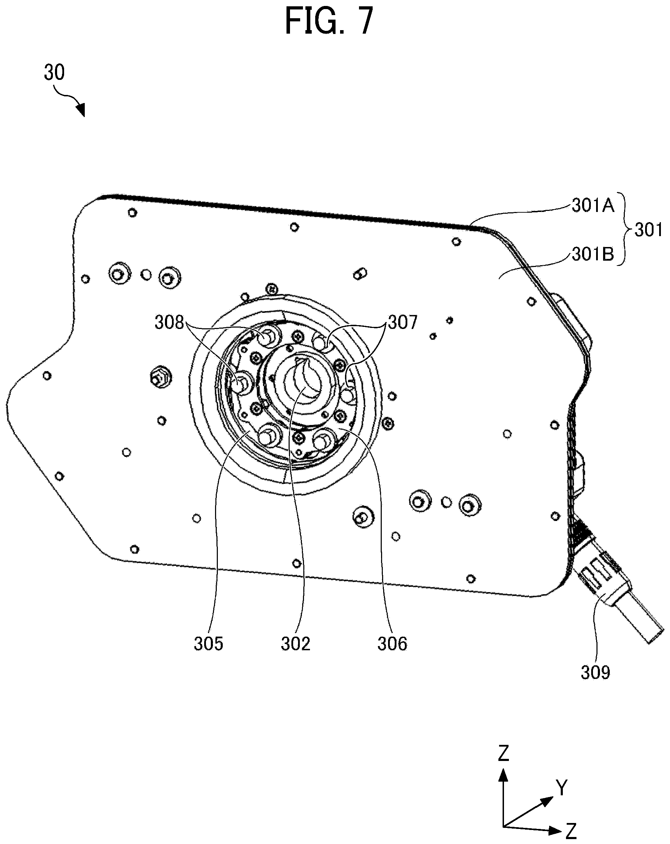

FIG. 6 is a perspective view of the brake unit 30 viewed from the positive Y direction, i.e., from the outer side in the lateral direction of the traveling apparatus 1 according to the present embodiment. FIG. 7 is a perspective view of the brake unit 30 viewed from the negative Y direction, i.e., from the inner side in the lateral direction of the traveling apparatus 1 according to the present embodiment.

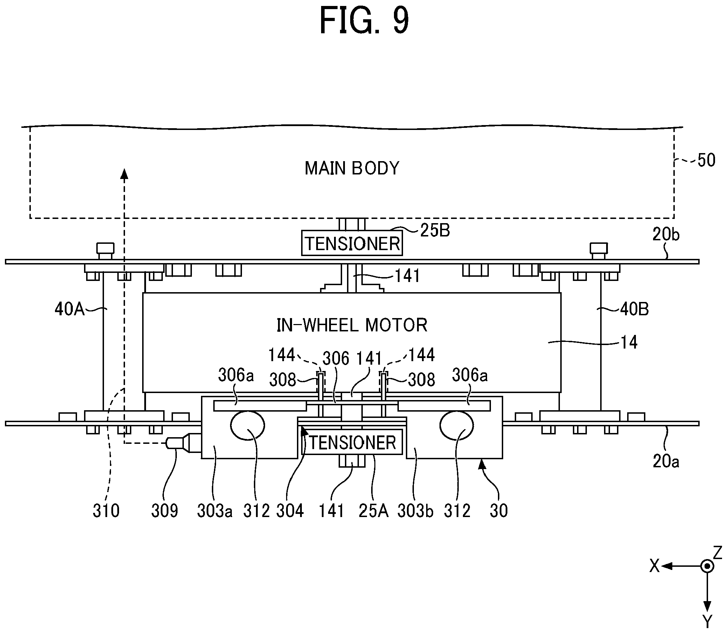

FIGS. 6 and 7 each illustrate the outer shape of a casing 301 of the brake unit 30. The casing 301 contains components related to the brake function. The casing 301 includes two casing members 301A and 301B as illustrated, for example, in FIGS. 6 and 7. After the components related to the brake function are installed in the two casing members 301A and 301B, the casing members 301A and 301B are coupled into the single casing 301 by, for example, screw fastening. Between the two casing members 301A and 301B, a thin rubber gasket is interposed to make the casing 301 waterproof and prevents water from entering the casing 301. The components related to the brake function contained in the brake unit 30 will be described in detail later with reference to, for example, FIG. 9.

As illustrated in FIG. 6, a through hole 302 is formed on the positive side in the Y direction of the casing 301. The through hole 302 is positioned at a central position of the casing 301 in the X direction and the Y direction. The motor shaft 141 (see FIG. 5) penetrates the through hole 302. On the positive side and the negative side of a central portion including the through hole 302 in the X direction, protruding portions 303a and 303b are disposed, respectively. The protruding portions 303a and 303b protrude in the positive Y direction relative to the central portion. In other words, the central portion that includes the through hole 302 and is interposed between the protruding portions 303a and 303b in the X direction is a recessed portion 304.

As illustrated in FIG. 7, a circular opening 305 opens on the Y negative side of the casing 301 in the Y direction. The circular opening 305 is concentric with the through hole 302. The through hole 302 is exposed at the center position of the circular opening 305. In the radial direction of the circular opening 305, an annular coupling plate 306 is disposed on the outer side of the through hole 302. The coupling plate 306 has multiple holes 307 at positions facing the bolt holes 144 (see FIG. 5) in the in-wheel motor 14. In the present embodiment described with reference to FIG. 6, the number of the holes 307 is six. Bolts 308 are inserted into the holes 307 from inside the casing 301, respectively.

In installing the brake unit 30, for example, first, the motor shaft 141 of the in-wheel motor 14 is inserted into the circular opening 305 of the casing member 301B and further inserted into an annular central hole inside the coupling plate 306. Then, the coupling plate 306 is disposed in the circular opening 305 so as to face the end face 143A (see FIG. 5) of the in-wheel motor 14. Further, with the holes 307 of the coupling plate 306 aligned with the bolt holes 144 of the end face 143A, the multiple (e.g., six in FIG. 6) bolts 308 are inserted from the positive side in the Y direction thereinto, thereby fastening the coupling plate 306 to the end face 143A. As a result, the coupling plate 306 of the brake unit 30 is fixed to the rotator 142 of the in-wheel motor 14. Accordingly, when the in-wheel motor 14 is driven, the coupling plate 306 rotates as an integral part of the rotator 142.

After the coupling plate 306 is fixed in this manner, the components related to the brake function are disposed on the positive side of (downstream from) the casing member 301B in the Y direction, and the casing member 301A is fixed to the casing member 301B. As a result, the brake unit 30 is assembled as a single unit and coupled to the in-wheel motor 14.

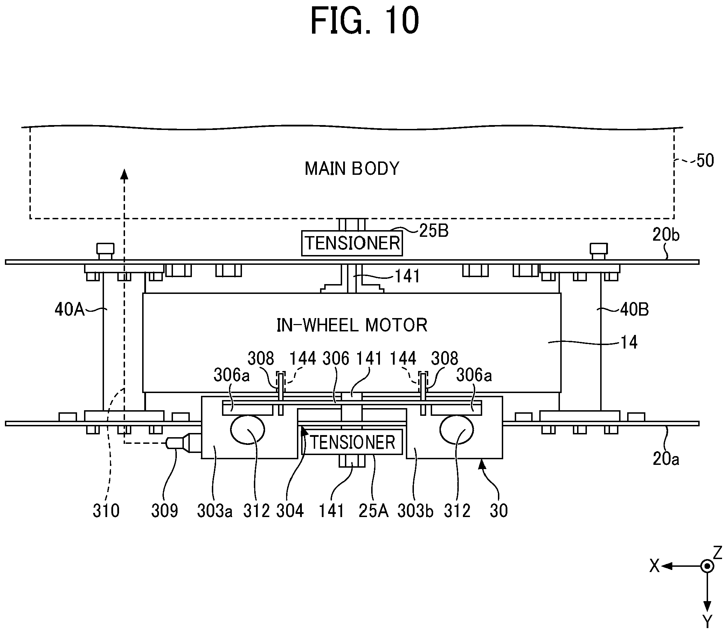

The brake unit 30 has the function of restricting, with the components contained in the casing 301, the rotation of the coupling plate 306 or a rotator 306a (e.g., a cam, see FIGS. 9 and 10) that is accommodated in the casing 301 and rotates as an integral part of the coupling plate 306. The brake unit 30 forcibly stops the rotation of the in-wheel motor 14 with this function when the in-wheel motor 14 is driven. Even when the in-wheel motor 14 is not controlled to stop (for example, when the in-wheel motor 14 is not energized and is freely rotatable), the brake unit 30 can be operated to maintain a stopped state of the in-wheel motor 14.

In the present embodiment described with reference to FIGS. 6 and 7, the brake unit 30 further includes a connector 309 at the protruding portion 303a on the positive side (on the left in FIG. 7) in the X direction of the brake unit 30. The connector 309 is electrically connected to the control unit inside the main body 50 and is also electrically connected to the components inside the casing 301.

FIG. 8 is a plan view of the components around the in-wheel motor 14 according to the present embodiment, illustrating their layout as viewed from above. FIG. 8 illustrates the component layout in the crawler traveling body 10a (see FIG. 1) on the positive side of the main body 50 in the Y direction. In the crawler traveling body 10b on the negative side of the main body 50 in the Y direction, the relative positions of the components are similar to that illustrated in FIG. 8 except that the component layout is reversed in the Y direction. FIG. 8 further schematically illustrates the relative positions between the crawler traveling body 10a and the main body 50, but the structure of the coupling between the crawler traveling body 10a and the main body 50 is omitted. As illustrated in FIG. 8, the side plates 20a and 20b that support the ends of the motor shaft 141 of the in-wheel motor 14 are disposed at substantially equal distances from the in-wheel motor 14 in the axial direction of the motor shaft 141. In the following description, the term "axial direction" may refer to the axial direction of the motor shaft 141 (the in-wheel motor 14) unless otherwise specified.

The tensioners 25A and 25B are held on the side plates 20a and 20b, respectively. In other words, as illustrated in FIG. 8, one crawler traveling body 10a includes the pair of tensioners 25A and 25B. The tensioner 25 described above with reference to, for example, FIG. 4 is the tensioner 25A on the positive side in the Y direction of the pair of tensioners 25A and 25B in FIG. 8. The tensioners 25A and 25B are also preferably disposed at substantially equal distances from the in-wheel motor 14 in the axial direction in order to apply tension from the drive wheel 13 substantially uniformly in the width direction (the Y direction) of the crawler 11.

Considering the size of the crawler traveling body 10, the brake unit 30 is preferably disposed inside the side plate 20a, i.e., between the in-wheel motor 14 and the side plate 20a in the Y direction. However, similar to crawler traveling bodies of the related art, the space between the in-wheel motor 14 and the side plate 20a is narrow with respect to the size of the brake unit 30, and it is structurally difficult to place the brake configuration in the narrow space. By contrast, when the side plate 20a is shifted farther in the Y direction from the center of the crawler traveling body 10a in accordance with the size of the brake unit 30 in the Y direction, the tensioner 25A is also shifted farther from the center in the Y direction. Accordingly, the width of the crawler traveling body 10 increases. Therefore, in the present embodiment, the brake unit 30 and the tensioner 25A overlap with each other as viewed in the X direction so as to satisfy both requirements of disposing the brake unit 30 inside the side plate 20a and preventing increases in the width of the crawler traveling body 10.

The side plate 20a has two openings 21a and 21b arranged in the X direction. In the brake unit 30, a portion indicated by a dot pattern in FIG. 8 (including the recessed portion 304) is a coupling portion 311 with the in-wheel motor 14. The coupling portion 311 is disposed between the side plate 20a and the in-wheel motor 14 such that the protruding portions 303a and 303b protrude outward from the openings 21a and 21b, respectively.

The tensioner 25A is accommodated in the recessed portion 304 of the brake unit 30 (i.e., in the space formed outside the casing member 301A by the recessed portion 304). The tensioner 25A is attached to the side plate 20a positioned farther from the center of the crawler traveling body 10a than the recessed portion 304. As a result, the end face of the tensioner 25A on the positive side in the Y direction can be shifted toward the in-wheel motor 14. The other tensioner 25B is disposed such that the tensioners 25A and 25B are substantially equal distances from the in-wheel motor 14 in the axial direction (the Y direction). This arrangement allows the crawler traveling body 10 according to the present embodiment to satisfy both requirements of disposing the brake unit 30 inside the side plate 20a and preventing increases in the width of the crawler traveling body 10.

In the present embodiment, as illustrated in FIG. 8, the side plates 20a and 20b are coupled to each other by hollow cylindrical members 40A and 40B. The cylindrical members 40A and 40B are open in the respective faces of the side plates 20a and 20b. In other words, the side plates 20a and 20b have openings that are continuous with the insides of the cylindrical members 40A and 40B. In the present embodiment, the connector 309 of the brake unit 30 is disposed in the vicinity of the opening of the cylindrical member 40A on the positive side in the X direction. As illustrated in FIG. 8, a wire 310 is drawn out from the connector 309 and introduced from the opening through the cylindrical member 40A into the main body 50. Accordingly, the main body 50 is electrically connected to the brake unit 30, and the main body 50 can control the operation of the brake unit 30.

FIG. 9 is a schematic diagram illustrating an internal configuration of the brake unit 30 according to the present embodiment. The overall configuration illustrated in FIG. 9 is similar to that illustrated in FIG. 8, except that the internal configuration of the brake unit 30 is illustrated in FIG. 9.

As illustrated in FIG. 9, in the brake unit 30, coupling elements (e.g., the coupling plate 306) with the in-wheel motor 14 are accommodated in the recessed portion 304 having the thinnest dimension in the Y direction. Many of these connecting elements are roughly plate shaped like the coupling plate 306, and can be accommodated in a small space. In other words, in the brake unit 30, the thin portion including the recessed portion 304 is the coupling portion 311 (see FIG. 8) coupled to the in-wheel motor 14. By contrast, for example, components for stopping the rotation of the coupling elements such as the coupling plate 306 are accommodated in the protruding portions 303a and 303b that are large in volume than the coupling portion 311. The components for stopping the rotation of the coupling elements include a control mechanism 312 (e.g., a solenoid) for controlling the rotation of the rotator 306a that is accommodated in the casing 301 and rotates as an integral part of the coupling plate 306.

When the rotator 306a is small, the coupling plate 306 or the control mechanism 312 for controlling the rotation of the rotator 306a may be disposed in the recessed portion 304. However, it is desirable that the coupling plate 306 and the control mechanism 312, which are relatively large, be accommodated in the protruding portions 303a and 303b.

FIG. 10 is a diagram schematically illustrating another internal configuration of the brake unit 30 according to the present embodiment. As illustrated in FIG. 10, the bolt holes 144 of the in-wheel motor 14 may be shifted outward in the radial direction from the arrangement illustrated in FIGS. 5 and 9, and the bolts 308 of the brake unit 30 may also be shifted outward in the radial direction from the arrangement illustrated in FIGS. 7 and 9 to match the positions of the bolt holes 144. Such a configuration allows, for example, the bolts 308, a component for coupling the bolts 308 with the coupling plate 306, and the rotator 306a to be disposed in the protruding portion 303a or 303b instead of the recessed portion 304. As illustrated in FIG. 10, such an arrangement can further reduce the thickness of the recessed portion 304 as compared with the configuration illustrated in FIG. 9 and increase the braking torque with respect to the in-wheel motor 14. Accordingly, the control performance is enhanced. Further, reducing the thickness of the recessed portion 304 has the following advantages. The tensioner 25A can be shifted further in the negative Y direction (i.e., toward the in-wheel motor 14) from the position illustrated in FIGS. 9 and 10, so as to increase the amount of overlap with the brake unit 30 and reduce the size of the crawler traveling body 10.

A description is given below of the effects of the crawler traveling body 10 according to the present embodiment. The crawler traveling body 10 according to the present embodiment includes the crawler 11, the in-wheel motor 14 to apply a driving force to the crawler 11, the drive wheel 13 in which the in-wheel motor 14 is built, at least two wheels 15a and 15b disposed below the drive wheel 13, the tensioner 25A, and the brake unit 30. The tensioner 25A presses the drive wheel 13 against the crawler 11 wound around the drive wheel 13 and the wheels 15a and 15b, to apply tension to the crawler 11. The brake unit 30 restricts the driving force, to stop the rotation of the crawler 11.

A description is given in detail of a configuration of a brake mechanism according to the present embodiment. Specifically, the brake mechanism includes the rotator 306a (cam) that fits in the coupling plate 306 and the control mechanism 312 (solenoid) that controls the rotator 306a (cam). When the control mechanism 312 (solenoid) is energized by a control signal sent from the control unit in the main body 50, the rotator 306a (cam) is fitted in the coupling plate 306 and applies a load to the coupling plate 306. As a result, the rotation of the coupling plate 306 is restricted, and the rotation of the in-wheel motor 14 is stopped. When the control mechanism 312 (solenoid) is powered off, the rotator 306a (cam) is released from the coupling plate 306. Then, no load is applied to the coupling plate 306, and the in-wheel motor 14 becomes rotatable. The above-described configuration of the brake mechanism is an example, and the brake mechanism may employ other components than the cam and the solenoid.

In the related art, crawler traveling bodies are typically stopped by the control of the in-wheel motor 14. For example, for stopping the rotation of the crawler 11, a control command for stopping the rotation of the in-wheel motor 14 is transmitted, and the rotation of the traveling body is also stopped after the in-wheel motor 14 is stopped according to the control command. For this reason, it is possible that the traveling body is not stopped at a desired time because the external force that the crawler 11 receives from the road surface varies depending on the road surface condition such as a slope or a rough road, causing the behavior of the traveling body to vary.

By contrast, the crawler traveling body 10 according to the present embodiment includes the brake unit 30 that actively and forcibly stops the rotation of the in-wheel motor 14. This configuration can restrict or stop the rotation of the in-wheel motor 14 reliably at a desired time. Accordingly, this configuration can stop also the rotation of the drive wheel 13 in which the in-wheel motor 14 is built at a desired time and stop the transmission of the driving force from the drive wheel 13 to the crawler 11 at a desired time with high accuracy. In practice, for example, the brake unit 30 is set to automatically turn on when the power supply of the main body 50 is turned off in a case where the traveling apparatus 1 including the crawler traveling bodies 10 stops on a slope due to an emergency stop or battery depletion. This setting can prevent the traveling apparatus 1 from moving down the slope due to the weight of the crawler traveling bodies 10 or the traveling apparatus 1. As described above, in the present embodiment, the brake unit 30 to stop the rotation of the crawler 11 is disposed in the crawler traveling bodies 10 each including the tensioner 25 that presses the drive wheel 13 of the in-wheel motor 14 against the crawler 11. Accordingly, the accuracy of the stop control of the crawler traveling bodies 10 can be enhanced. As a result, the crawler traveling bodies 10 can be stopped regardless of the installation situation.

In the crawler traveling body 10 according to the present embodiment, the brake unit 30 and the tensioner 25A are disposed on the axis of the motor shaft 141 that is the rotation shaft of the in-wheel motor 14. Specifically, the brake unit 30 and the tensioner 25A are disposed with the longitudinal directions thereof along the XZ plane perpendicular to the axial direction (the Y direction) of the motor shaft 141, and the motor shaft 141 passes through the brake unit 30 and the tensioner 25A. In the present embodiment, as illustrated in, for example, FIGS. 1 and 4, the brake unit 30 is disposed such that the longitudinal direction thereof is in the X direction, and the tensioner 25A is disposed such that the longitudinal direction thereof is in the Z direction. Each of the tensioner 25A and the brake unit 30 has a flat-plate shape as a whole and is disposed such that the short side of the flat-plate shape extends in the direction of the rotation axis of the in-wheel motor 14. This arrangement can reduce the size of the crawler traveling body 10 in the direction of the rotation axis of the in-wheel motor 14, i.e., the width direction perpendicular to the advancing direction of the crawler traveling body 10.

In the crawler traveling body 10 according to the present embodiment, the in-wheel motor 14 includes the rotator 142 (see FIG. 5) that is disposed around the motor shaft 141 and rotates. The brake unit 30 is coupled to the rotator 142 of the in-wheel motor 14, and the tensioner 25A is coupled to the motor shaft 141. The coupling portion 311 of the brake unit 30 coupled to the in-wheel motor 14 is interposed between the in-wheel motor 14 and the tensioner 25A.

In order to press the drive wheel 13 against the crawler 11 for efficiently and stably applying tension to the crawler 11, the tensioners 25A and 25B are preferably disposed as far as possible from the in-wheel motor 14 in the axial direction of the in-wheel motor 14. Such an arrangement can increase the stroke of the shafts 253a and 253b (illustrated in FIG. 4) of the tensioners 25A and 25B. Stabilizing the functions of the tensioners 25A and 25B has the following advantage, for example. When the motor shaft 141 of the in-wheel motor 14 moves up and down, the motor shaft 141 is prevented from being inclined and can smoothly move up and down. In the present embodiment, since the brake unit 30 is disposed between the in-wheel motor 14 and the tensioner 25A, the brake unit 30 can be installed while maintaining the function of the tensioner 25A.

In the crawler traveling body 10 according to the present embodiment, the brake unit 30 is disposed overlapping, at least partially, with the tensioner 25A in the radial direction of the drive wheel 13. More specifically, as illustrated, for example, in FIG. 8, the brake unit 30 includes the recessed portion 304 formed as the portion including the coupling portion 311 with the in-wheel motor 14 is recessed toward the in-wheel motor 14, and the tensioner 25A is disposed in the recessed portion 304.

As described above, crawler traveling bodies of the related art are typically stopped by the control of the in-wheel motor, and the brake unit is not installed. When the brake unit 30 is added to a configuration that is not designed for installing the brake unit 30 in the vicinity of the in-wheel motor 14, the crawler traveling bodies 10 and the traveling apparatus 1 including the crawler traveling bodies 10 would undesirably increase in size. By contrast, in the present embodiment, the brake unit 30 overlaps, at least partially, with the tensioner 25A in the radial direction of the drive wheel 13. This configuration can reduce an increase in the size of the crawler traveling body 10 in the axial direction due to the addition of the brake unit 30.

The configuration in which the brake unit 30 overlaps, at least partially, with the tensioner 25A in the radial direction of the drive wheel 13 is not limited to the configuration in which the tensioner 25A is accommodated in the recessed portion 304 as illustrated, for example, in FIG. 8. Alternatively, for example, a step or a cutout for accommodating the tensioner 25A may be formed in the face of the casing 301 (see FIG. 6) of the brake unit 30. The step or the cutout may be formed at one end in the X direction of the positive-side face of the casing 301 in the Y direction. In this case, since a portion of the brake unit 30 including the step or the cutout is relatively small in the Y direction, it is preferable that the portion including the step or the cutout be used as the coupling portion 311 with the in-wheel motor 14, to reduce an increase in the size of the crawler traveling body 10.

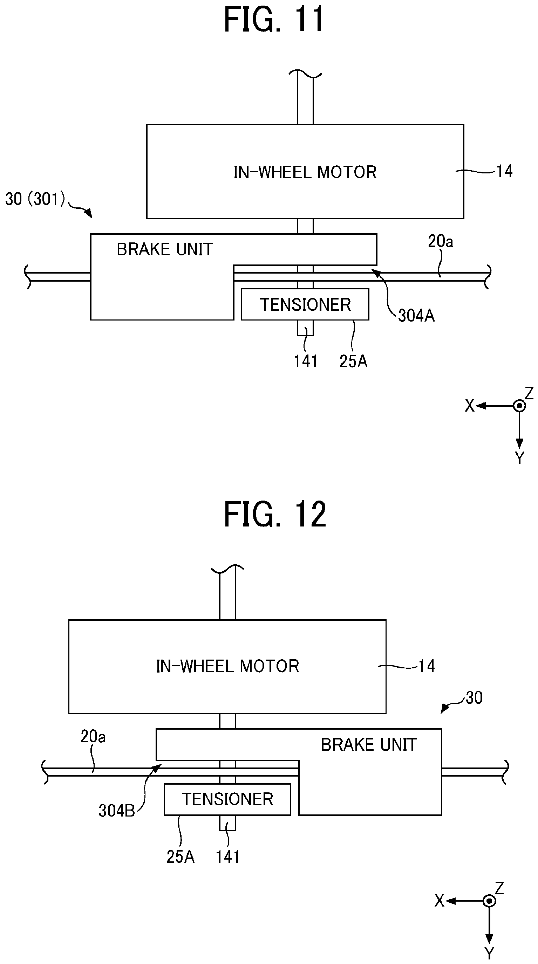

FIG. 11 is a schematic diagram illustrating another arrangement of the brake unit 30 and the tensioner 25A according to the present embodiment. In the arrangement illustrated in FIG. 11, the brake unit 30 includes a stepped portion 304A at the negative-side end in the X direction thereof. The stepped portion 304A is recessed in the negative Y direction from the positive-side face in the Y direction of the casing 301. In this case, the tensioner 25A can be installed in the space formed by the stepped portion 304A. Further, in the arrangement illustrated in FIG. 11, since the tensioner 25A is coupled to the motor shaft 141 of the in-wheel motor 14, the brake unit 30 is disposed such that the motor shaft 141 is inserted into the stepped portion 304A at the negative-side end in the X direction. In other words, as illustrated in FIG. 11, the entire brake unit 30 is shifted in the positive X direction with respect to the in-wheel motor 14 and the tensioner 25A, compared with the configuration illustrated in, for example, FIG. 8.

FIG. 12 is a schematic diagram illustrating another arrangement of the brake unit 30 and the tensioner 25A according to the present embodiment. In the arrangement illustrated in FIG. 12, the brake unit 30 includes a stepped portion 304B at the positive-side end in the X direction thereof. The stepped portion 304B is recessed in the negative Y direction from the positive-side face in the Y direction of the casing 301. In this case, the tensioner 25A can be installed in the space formed by the stepped portion 304B. Further, in the arrangement illustrated in FIG. 12, since the tensioner 25A is coupled to the motor shaft 141 of the in-wheel motor 14, the brake unit 30 is disposed such that the motor shaft 141 is inserted into the stepped portion 304A at the positive-side end in the X direction. In other words, as illustrated in FIG. 12, the entire brake unit 30 is shifted in the negative X direction with respect to the in-wheel motor 14 and the tensioner 25A, compared with the configuration illustrated in, for example, FIG. 8.

The crawler traveling body 10 according to the present embodiment includes the flat side plate 20a that holds the motor shaft 141 and is disposed farther from the center of the crawler traveling body 10 than the in-wheel motor 14 in the axial direction of the in-wheel motor 14. The tensioner 25A is disposed on an outer face of the side plate 20a in the axial direction of the in-wheel motor 14, and the recessed portion 304 of the brake unit 30 is disposed between the side plate 20a and the in-wheel motor 14. The side plate 20a has the openings 21a and 21b. The brake unit 30 includes the protruding portions 303a and 303b protruding outward in the axial direction of the in-wheel motor 14 relative to the recessed portion 304. The protruding portions 303a and 303b of the brake unit 30 protrude through the openings 21a and 21b from the side plate 20a outward in the axial direction of the in-wheel motor 14.

With this configuration, when the openings 21a and 21b are added to the side plate 20a of the crawler traveling body of the related art, the brake unit 30 can be installed in the crawler traveling body of the related art without changing the interval between the in-wheel motor 14 and the side plate 20a, and the structure of the related art for attaching the tensioner 25A to the side plate 20a can be used. Accordingly, many existing parts of the crawler traveling body of the related art can be used when installing the brake unit 30, and the manufacturing cost can be reduced.

The traveling apparatus 1 according to the present embodiment includes the traveling control motor driver 540 as the control unit for controlling the traveling of the crawler traveling bodies 10. The in-wheel motor 14 includes the rotator 142. The brake unit 30 includes the coupling plate 306 coupled to the rotator 142. The traveling control motor driver 540 controls the rotation of the coupling plate 306 to control the rotation of the rotator 142. With this configuration, since the brake unit 30 can stop the rotation of the in-wheel motor 14 by controlling the rotation of the coupling plate 306, the stop can be controlled more easily and reliably.

The traveling apparatus 1 according to the present embodiment includes the pair of crawler traveling bodies 10a and 10b and the main body 50 that supports the crawler traveling bodies 10a and 10b. The crawler traveling bodies 10a and 10b are disposed one on each side of the main body 50 in the width direction, respectively. The brake units 30a and 30b of the crawler traveling bodies 10a and 10b are disposed on the respective outer sides of the crawler traveling bodies 10a and 10b in the width direction of the traveling apparatus 1, respectively. The outer sides of the crawler traveling bodies 10a and 10b are farther sides of the crawler traveling bodies 10a and 10b from the main body 50.

With this configuration, since the brake units 30a and 30b are exposed on the sides of the traveling apparatus 1, the maintenance of the brake units 30a and 30b can be performed with the crawler traveling bodies 10a and 10b attached to the main body 50. Accordingly, the maintenance of the brake units 30a and 30b can be easily performed, enhancing the maintainability. Further, this configuration can prevent the interference of the brake unit 30 between the crawler traveling body 10 and the main body 50.

In the traveling apparatus 1 according to the present embodiment, each of the crawler traveling bodies 10a and 10b includes the side plates 20a and 20b. The side plates 20a and 20b are disposed one on each side of the drive wheel 13 and the wheels 15a and 15b in the axial direction and rotatably support the drive wheel 13 and the wheels 15a and 15b. The side plates 20a and 20b are coupled by the hollow cylindrical members 40A and 40B. The wires 310 (see FIG. 8) that electrically connect the brake units 30a and 30b to the control unit (for example, the traveling control motor driver 540 illustrated in FIG. 3) in the main body 50 are introduced into the main body 50 through the cylindrical members 40A from the outer sides of the crawler traveling bodies 10a and 10b in the axial direction (in the width direction of the traveling apparatus 1).

Such a manner of connection is advantageous in the configuration in which the brake units 30a and 30b are respectively disposed on the outer sides of the crawler traveling bodies 10a and 10b in the width direction of the traveling apparatus 1 in order to enhance the maintainability of the brake units 30a and 30b as described above. Specifically, the control unit in the main body 50 disposed at the center of the traveling apparatus 1 in the width direction can be electrically connected to the brake units 30a and 30b. Further, since the wire 310 is passed through the cylindrical member 40A that couples the side plate 20a with the side plate 20b, a safe wire path can be achieved.

Note that the description is given above of the present embodiment in which all the cylindrical members 40A and 40B that are the coupling members coupling the side plates 20a and 20b are hollow pipe shaped with reference to, for example, FIGS. 4 and 8. Alternatively, as long as the coupling members that provide the wire paths for the wires 310 connecting the brake units 30 and the main body 50 are pipe shaped, some or all of the other coupling members may be, for example, solid rod shaped.

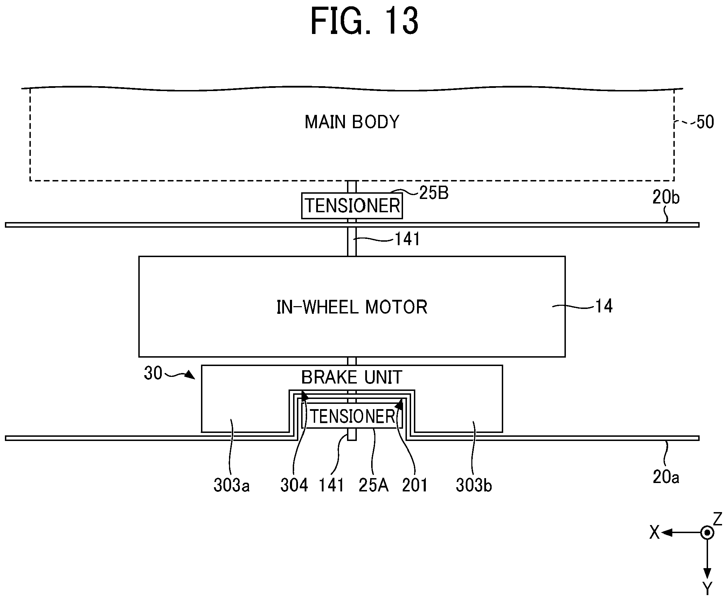

Modifications of the above-described embodiment are described below with reference to FIGS. 13 to 16. The arrangement of the brake unit 30 and the tensioner 25A in the axial direction is not limited to the arrangement illustrated in FIG. 8. As long as the brake unit 30 and the tensioner 25A are arranged on the axis (the motor shaft 141) of the in-wheel motor 14, the arrangement may be modified.

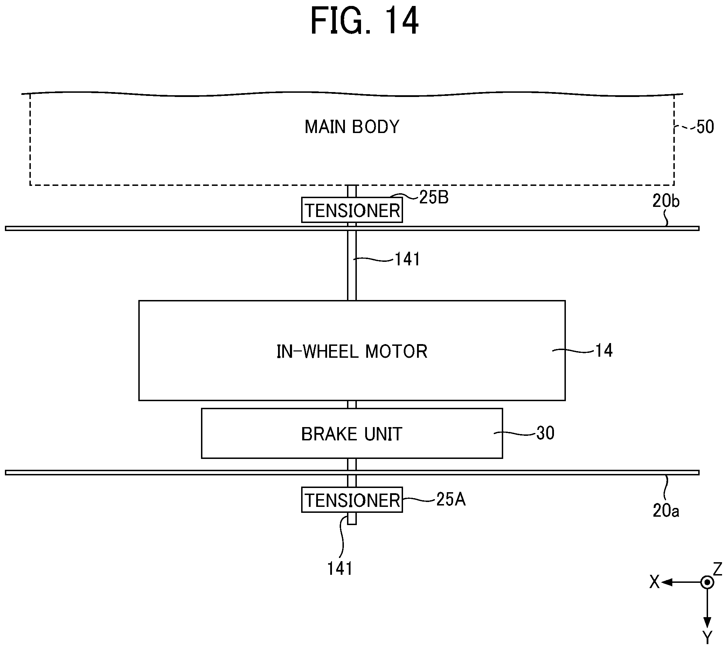

FIG. 13 is a plan view of the brake unit 30 and the tensioner 25A according to a first modification of the above-described embodiment, illustrating their arrangement as viewed from above. The configuration illustrated in FIG. 13 and the configurations illustrated in FIGS. 14 to 16 described later are similar to that illustrated in FIG. 8 except the differences described below. As in the first modification illustrated in FIG. 13, the openings 21a and 21b are not formed in the side plate 20a, and the side plate 20a may be shaped to follow the shapes of the protruding portion 303a, the recessed portion 304, and the protruding portion 303b of the brake unit 30. Specifically, the side plate 20a includes a recessed portion 201 facing the recessed portion 304 of the brake unit 30, shaped to fit in the recessed portion 304 of the brake unit 30. With this configuration, the size of the crawler traveling body 10 in the axial direction can be similar to that in the above-described embodiment.

In the configuration of the first modification illustrated in FIG. 13, the protruding portions 303a and 303b of the brake unit 30 are also closer to the in-wheel motor 14 than the side plate 20a, and the entire brake unit 30 is closer to the in-wheel motor 14 than the side plate 20a. As a result, since the brake unit 30 is not exposed to the outside, for example, when the crawler traveling body 10 falls, the brake unit 30 can be prevented from directly colliding with an external obstacle and from being damaged.

FIG. 14 is a plan view of the brake unit 30 and the tensioner 25A according to a second modification of the above-described embodiment, illustrating their arrangement as viewed from above. As in the second modification illustrated in FIG. 14, the positive-side face of the brake unit 30 in the Y direction may be flat without the recessed portion 304.

In the second modification illustrated in FIG. 14, the side plate 20a is farther from the in-wheel motor 14 than the brake unit 30, and the tensioner 25A is farther from the in-wheel motor 14 than the side plate 20a. The distance between the tensioner 25A and the in-wheel motor 14 in the axial direction is larger than that in the configuration in which the tensioner 25A is accommodated in the recessed portion 304 of the brake unit 30 as illustrated in FIGS. 8 and 13. The distance from the in-wheel motor 14 to the tensioner 25B on the opposite side is also increased in accordance with the position of the tensioner 25A. In order to press the drive wheel 13 against the crawler 11 to efficiently apply tension to the crawler 11, the tensioners 25A and 25B are preferably disposed as far as possible from the in-wheel motor 14 in the axial direction. In the second modification of FIG. 14, since the distances between the tensioners 25A and 25B and the in-wheel motor 14 are larger than those in the above-described embodiment, the function of applying tension to the crawler 11 can be more efficiently exhibited.

Similar to the first modification illustrated in FIG. 13, the entire brake unit 30 is disposed closer to the in-wheel motor 14 than the side plate 20a in the second modification illustrated in FIG. 14. As a result, since the brake unit 30 is not exposed to the outside, for example, when the crawler traveling body 10 falls, the brake unit 30 can be prevented from directly colliding with an external obstacle and from being damaged.

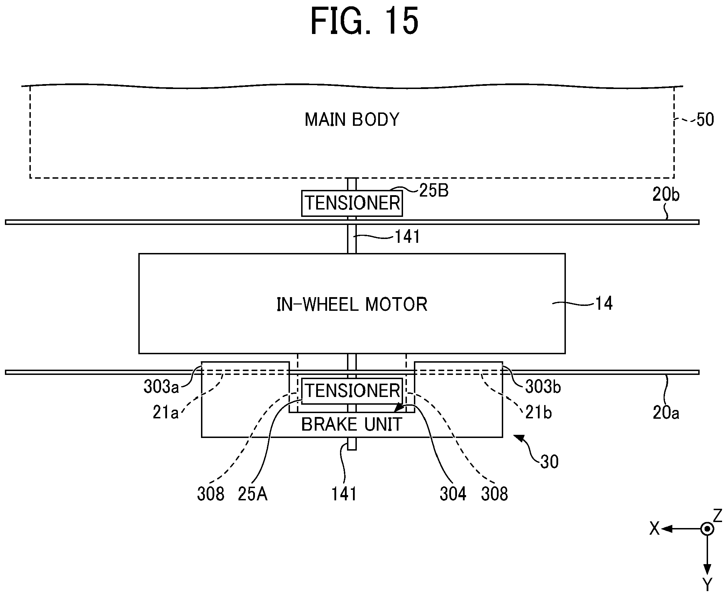

FIG. 15 is a plan view of the brake unit 30 and the tensioner 25A according to a third modification of the above-described embodiment, illustrating their arrangement as viewed from above. As in the third modification illustrated in FIG. 15, the brake unit 30 may be disposed farther from the in-wheel motor 14 than the tensioner 25A in the axial direction. In this case, as illustrated in FIG. 15, it is preferable that the brake unit 30, the tensioner 25A, and the side plate 20a have shapes similar to those in the above-described embodiment and the orientations of these components be reversed in the axial direction. Such a configuration allows the tensioner 25A to be disposed in the recessed portion 304 of the brake unit 30 even in the configuration illustrated in FIG. 15. Accordingly, the size of the crawler traveling body 10 in the axial direction can be similar to that in the above-described embodiment.

In the configuration illustrated in FIG. 15, the brake unit 30 can be coupled to the in-wheel motor 14 when the bolts 308 of the brake unit 30 are passed through the clearance between the sidewall of the recessed portion 304 and the tensioner 25A and inserted into insertion holes formed in the side plate 20a.

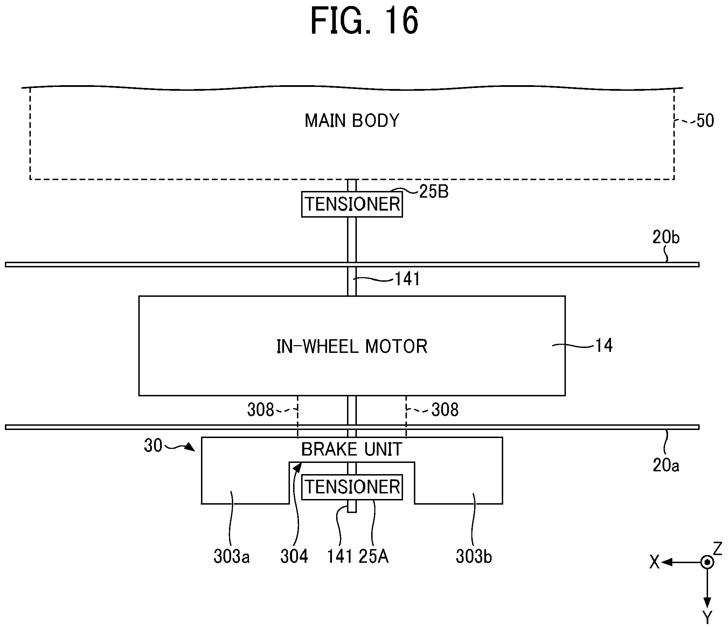

FIG. 16 is a plan view of the brake unit 30 and the tensioner 25A according to a fourth modification of the above-described embodiment, illustrating their arrangement as viewed from above. As in the fourth modification illustrated in FIG. 16, the side plate 20a, the brake unit 30, and the tensioner 25A may be arranged in this order from the closer side to the in-wheel motor 14 in the axial direction. In this configuration, the tensioner 25A is disposed not on the side plate 20a but on the bottom of the recessed portion 304 of the casing 301 of the brake unit 30. The configuration illustrated in FIG. 16 allows the tensioner 25A to be disposed in the recessed portion 304 of the brake unit 30. Accordingly, the size of the crawler traveling body 10 in the axial direction can be similar to that in the above-described embodiment.

Note that, in the above-described embodiment illustrated in FIGS. 8 and the modifications illustrated in FIGS. 13 to 16, the brake unit 30 is farther from the center of the traveling apparatus 1 than the in-wheel motor 14 in the axial direction, but, alternatively, the brake unit 30 may be closer to the center of the traveling apparatus 1 than the in-wheel motor 14 in the axial direction. In other words, the brake unit 30 may be between the in-wheel motor 14 and the main body 50. In such an arrangement, the main body 50 is disposed on the lower side in the FIGS. 8 and 13 to 16.

The embodiments of the present disclosure are described above with reference to specific examples. However, the present disclosure is not limited to the specific examples described above. The elements in the specific examples described above, as well as the arrangement, conditions, and shapes of those elements are not limited to those described or illustrated, but can be changed as appropriate.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

Aspects of the present disclosure are, for example, as follows.

In Aspect 1, a crawler traveling body includes a crawler, an in-wheel motor to apply a driving force to the crawler, a drive wheel in which the in-wheel motor is built, at least two wheels disposed below the drive wheel, and a tensioner to press the drive wheel against the crawler wound around the drive wheel and the wheels, to apply tension to the crawler.

The crawler traveling body further includes a brake unit to restrict the driving force to stop the crawler from rotating.

In Aspect 2, in the crawler traveling body according to Aspect 1, the brake unit and the tensioner are on an axis of a rotation shaft of the in-wheel motor.

In Aspect 3, in the crawler traveling body according to Aspect 2, the in-wheel motor includes a rotator that is disposed around the rotation shaft and is to rotate, the brake unit including a coupling portion coupled with the rotator of the in-wheel motor, the tensioner is coupled to the rotation shaft, and the coupling portion of the brake unit with the in-wheel motor is disposed between the in-wheel motor and the tensioner.

In Aspect 4, in the crawler traveling body according to any one of Aspects 1 to 3, the brake unit is disposed overlapping, at least partially, with the tensioner in a radial direction of the drive wheel.

In Aspect 5, in the crawler traveling body according to any one of Aspects 1 to 4, the brake unit includes a recessed portion that is recessed toward the in-wheel motor and includes a coupling portion with the in-wheel motor, and the tensioner is disposed in the recessed portion.

In Aspect 6, the crawler traveling body according to Aspect 5 further includes a flat side plate that is disposed farther from a center of the crawler traveling body than the in-wheel motor in the axial direction of the in-wheel motor. The side plate holds the rotation shaft of the in-wheel motor.

The tensioner is disposed on an outer face of the side plate in the axial direction of the in-wheel motor. The recessed portion of the brake unit is disposed between the side plate and the in-wheel motor. The side plate includes an opening, and the brake unit includes a protruding portion that protrudes outward in the axial direction relative to the recessed portion. The protruding portion of the brake unit protrudes through the opening beyond the side plate outward in the axial direction.

In Aspect 7, the crawler traveling body according to any one of Aspects 1 to 6 further includes a control mechanism to control the rotation of the in-wheel motor. The in-wheel motor includes a rotator, and the brake unit includes a coupling plate coupled to the rotator, and the control mechanism controls the rotation of the coupling plate, to control the rotation of the rotator.

In Aspect 8, a traveling apparatus includes the crawler traveling body according to any one of Aspects 1 to 7, and the crawler traveling body includes at least two crawler traveling bodies, and a main body that supports the at least two crawler traveling bodies.

In Aspect 9, in the traveling apparatus according to Aspect 8, the crawler traveling body includes two crawler traveling bodies disposed one on each side of the main body in a width direction of the main body, and the brake unit is disposed on a farther side of each of the two crawler traveling bodies from the main body in a width direction of the crawler traveling body.

In Aspect 10, in the traveling apparatus according to Aspect 9, each of the two crawler traveling bodies includes two side plates that are disposed one on each side of the drive wheel and the wheels in the axial direction and support the drive wheel and the wheels to rotate. The side plates are coupled by a hollow cylindrical member, and a wire that electrically connects the brake unit to the control unit in the main body is introduced through the cylindrical member from the farther side of the crawler traveling body in the axial direction into the main body disposed on the inner side in the axial direction.

## Claims

1. A crawler traveling body comprising:
a crawler (11);
an in-wheel motor (14) configured to apply a driving force to the crawler (11), the in-wheel motor (14) having a rotation shaft (141);
a drive wheel (13) in which the in-wheel motor (14) is built;
two wheels (15a, 15b) disposed below the drive wheel (13);
a tensioner (25A, 25B) that presses the drive wheel (13) against the crawler (11) wound around the drive wheel (13) and the two wheels (15a, 15b), to apply tension to the crawler (11); and
a brake unit (30) configured to restrict the driving force to stop rotation of the crawler (11).

2. The crawler traveling body according to claim 1,
wherein the brake unit (30) and the tensioner (25A, 25B) are on an axis of the rotation shaft (141) of the in-wheel motor (14).

3. The crawler traveling body according to claim 2,
wherein the in-wheel motor (14) includes a rotator (142) that is disposed around the rotation shaft (141) and is configured to rotate,
wherein the brake unit (30) includes a coupling portion (311) coupled with the rotator (142) of the in-wheel motor (14),
wherein the tensioner (25A, 25B) is coupled to the rotation shaft (141) of the in-wheel motor (14), and
wherein the coupling portion (311) of the brake unit (30) with the in-wheel motor (14) is disposed between the in-wheel motor (14) and the tensioner (25A, 25B).

4. The crawler traveling body according to any one of claims 1 to 3,
wherein the brake unit (30) is disposed overlapping, at least partially, with the tensioner (25A, 25B) in a radial direction of the drive wheel (13).

5. The crawler traveling body according to any one of claims 1 to 4,
wherein the brake unit (30) includes a recessed portion (304) that is recessed toward the in-wheel motor (14), the recessed portion (304) including a coupling portion (311) with the in-wheel motor (14), and
wherein the tensioner (25A, 25B) is disposed in the recessed portion (304).

6. The crawler traveling body according to claim 5, further comprising a flat side plate (20a; 20b) that holds the rotation shaft (141) of the in-wheel motor (14), the flat side plate (20a; 20b) being disposed farther from a center of the crawler traveling body than the in-wheel motor (14) in an axial direction of the in-wheel motor (14),
wherein the tensioner (25A, 25B) is disposed on an outer face of the flat side plate (20a; 20b) in the axial direction of the in-wheel motor (14),
wherein the recessed portion (304) of the brake unit (30) is disposed between the flat side plate (20a; 20b) and the in-wheel motor (14),
wherein the flat side plate (20a; 20b) includes an opening (21a; 21b), and
wherein the brake unit (30) includes a protruding portion (303a; 303b) relative to the recessed portion (304), the protruding portion (303a; 303b) protruding outward through the opening (21a; 21b) beyond the flat side plate (20a; 20b) in the axial direction.

7. The crawler traveling body according to any one of claims 1 to 6, further comprising a control mechanism (312) configured to control rotation of the in-wheel motor (14),
wherein the in-wheel motor (14) includes a rotator (142), and the brake unit (30) includes a coupling plate (306) coupled to the rotator (142), and
wherein the control mechanism (312) is configured to control rotation of the coupling plate (306), to control rotation of the rotator (142).

8. A traveling apparatus comprising:
the crawler traveling body (10a; 10b) according to any one of claims 1 to 7, the crawler traveling body (10a; 10b) including two crawler traveling bodies (10a, 10b); and
a main body (50) that supports the two crawler traveling bodies (10a, 10b).

9. The traveling apparatus according to claim 8,
wherein the two crawler traveling bodies (10a, 10b) are disposed one on each side of the main body (50) in a width direction of the main body (50), and
the brake unit (30) is disposed on a farther side of each of the two crawler traveling bodies (10a, 10b) from the main body (50) in the width direction.

10. The traveling apparatus according to claim 9,
further comprising a control unit (540) configured to control driving of the traveling apparatus,
wherein each of the two crawler traveling bodies (10a, 10b) includes two side plates (20a; 20b) that are disposed one on each side of the drive wheel (13) and the two wheels (15a, 15b) in an axial direction of the drive wheel (13) and support the drive wheel (13) and the two wheels (15a, 15b) to rotate,
wherein the two side plates (20a; 20b) are coupled by a hollow cylindrical member (40A; 40B), and
wherein a wire (310) electrically connecting the brake unit (30) to the control unit (540) is introduced through the hollow cylindrical member (40A; 40B) from the farther side of the crawler traveling body (10a, 10b) in the axial direction into the main body (50).
